# EUROPÄISCHE PATENTSCHRIFT

(11) **EP 0 828 421 B1**
(45) Veröffentlichungstag und Bekanntmachung des Hinweises auf die Patenterteilung: **26.04.2006**
(21) Anmeldenummer: 96919773.0
(22) Anmeldetag: 13.05.1996
(51) Int. Cl.: A01N 51/00, A01N 47/40, A01N 57/28

(54) **Synergistische insektizide Mischungen auf der Basis von Chlornicotinyl-Insektiziden**
Synergistic insecticidal mixtures based on chloronicotinyl insecticides
Mélanges insecticides synergiques à base d'insecticides chloronicotiniques

(30) Priorität: 24.05.1995 DE 19519007
(43) Veröffentlichungstag der Anmeldung: 18.03.1998
(60) Teilanmeldung: 06001174.9
(73) Patentinhaber: Bayer CropScience AG, 40789 Monheim (DE)
(72) Erfinder: ERDELEN, Christoph, D-42799 Leichlingen (DE); KRÄMER, Wolfgang, D-51399 Burscheid (DE); BRÜGGEN, Kai-Uwe, D-45549 Sprockhövel (DE)
(86) Internationale Anmeldenummer: PCT/EP1996/002039
(87) Internationale Veröffentlichungsnummer: WO 1996/037105

(56) Entgegenhaltungen:
- EP-A- 0 235 725
- EP-A- 0 387 663
- WO-A-93/00009
- WO-A-95/33380
- WO-A-96/10915
- WO-A-96/17520
- WO-A-96/23411
- FR-A- 2 720 230
- CLIVE TOMLIN (ED.): "The Pesticide Manual, 10th. edition" 1994 , THE ROYAL SOCIETY OF CHEMISTRY , CAMBRIDGE, GB XP002016712 Einträge 502 und 507 Einträge 42, 574, 465, 4, 462, 200, 1, 694, 262, 384, 150, 301, 609, 184, 314, 659, 652, 429, 626 und 595
- CHEMICAL PATENTS INDEX, BASIC ABSTRACTS JOURNAL Week 8827 31.August 1988 Derwent Publications Ltd., London, GB; AN 88-188020 XP002016789 & JP,A,63 126 810 (NIHON TOKUSHU NOYAKU)
- CHEMICAL PATENTS INDEX, BASIC ABSTRACTS JOURNAL Week 8827 31.August 1988 Derwent Publications Ltd., London, GB; AN 88-188016 XP002016790 & JP,A,63 126 806 (NIHON TOKUSHU NOYAKU)
- CHEMICAL PATENTS INDEX, DOCUMENTATION ABSTRACTS JOURNAL Week 9222 29.Juli 1992 Derwent Publications Ltd., London, GB; AN 92-178403 XP002016791 & JP,A,04 112 805 (TAKEDA CHEM. IND. LTD)
- CHEMICAL PATENTS INDEX, DOCUMENTATION ABSTRACTS JOURNAL Week 9222 29.Juli 1992 Derwent Publications Ltd., London, GB; AN 92-178402 XP002016792 & JP,A,04 112 804 (TAKEDA CHEM. IND. LTD.)
- PATENT ABSTRACTS OF JAPAN vol. 16, no. 375 (C-973) [5418] , 12.August 1992 & JP,A,04 120007 (TAKEDA CHEM.IND. LTD)
- CHEMICAL PATENTS INDEX, DOCUMENTATION ABSTRACTS JOURNAL Week 9108 24.April 1991 Derwent Publications Ltd., London, GB; AN 91-055545 XP002016799 & JP,A,03 007 206 (NIHON TOKUSHU NOYAKU)
- CHEMICAL PATENTS INDEX, BASIC ABSTRACTS JOURNAL Week 8827 31.August 1988 Derwent Publications Ltd., London, GB; AN 88-188015 XP002016800 & JP,A,63 126 805 (NIHON TOKUSHU NOYAKU)
- CHEMICAL PATENTS INDEX, DOCUMENTATION ABSTRACTS JOURNAL Week 9502 24.Februar 1995 Derwent Publications Ltd., London, GB; AN 95-011717 XP002016801 & JP,A,06 298 609 (NIPPON KAYAKU K.K.)
- CHEMICAL PATENTS INDEX, DOCUMENTATION ABSTRACTS JOURNAL Week 9437 16.November 1994 Derwent Publications Ltd., London, GB; AN 94-299631 XP002016802 & JP,A,06 227 909 (NIPPON KAYAKU K.K.)
- R.WEGLER (ED.), K. NAUMANN: "Chemie der Pflanzenschutz- und Schädlingsbekämpfungsmittel, Band 7, Chemie der synthetischen Pyrethorid-Insektizide " , SPRINGER-VERLAG , BERLIN,DE XP002016798 in der Anmeldung erwähnt siehe Seite 3 - Seite 5

## Beschreibung

Die vorliegende Erfindung betrifft synergistische insektizide Mischungen auf der Basis von Chlornicotinyl-Insektiziden und dem Insektizid, O, S - Dimethylamidothiophosphat (Methamidophos, Handelsname M.a. Tamarou®)

Chlornicotinyl-Insektizide sind bekannt z.B. aus EP-OS 192 060 und EP O 235 725.

Aus den Dokumenten JP 63 126 810 A, JP 04 112 805 A und JP 03 007 206 sind Mischungen von bestimmten Chlornicotinyl-Insektiziden mit dem phosphororganischen Insektizid Acephat bekannt.

Die vorliegende Erfindung betrifft Mischungen von Chlornicotinyl-Insektiziden der Formel (I) 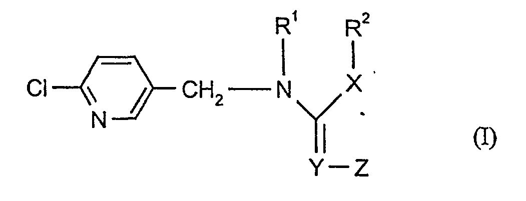 in welcher
- R¹: für C₁-C₅-Alkyl steht,
- R²: für Wasserstoff oder C₁-C₅-Alkyl steht
oder
R¹ und R² zusammen für -CH₂-CH₂-; -CH₂-CH₂-CH₂- oder 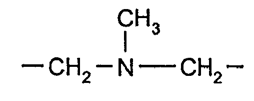 stehen,
- X: für eine NH-Gruppe, NCH₃-Gruppe oder für Schwefel steht,
- Y: für Stickstoff oder eine CH-Gruppe steht und
- Z: für Cyano oder Nitro steht,
mit dem synergistisch wirkenden Insektizid Methamidophos.

Bevorzugt sind erfindungsgemäße Mischungen des oben genannten Synergisten mit Chlornicotinyl Insektiziden folgender Strukturformeln:

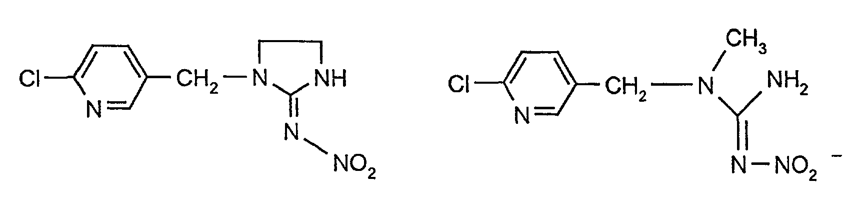

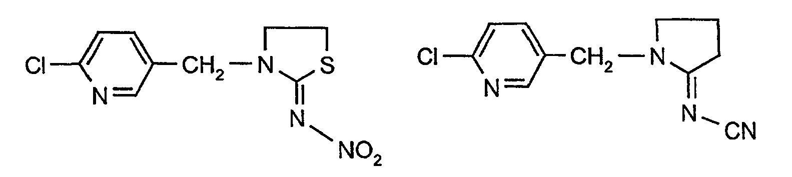

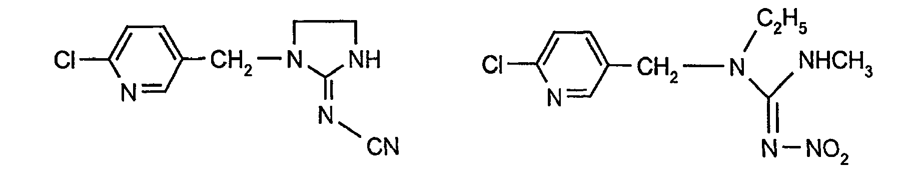

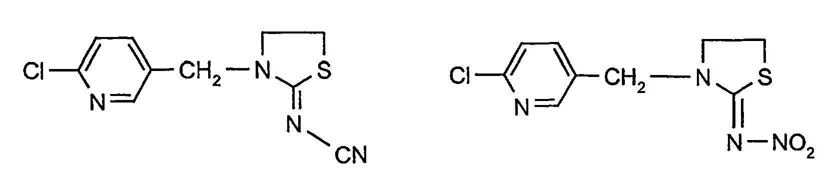

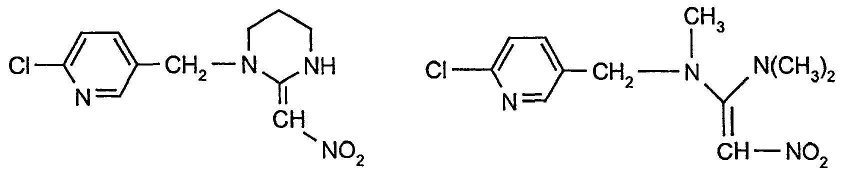

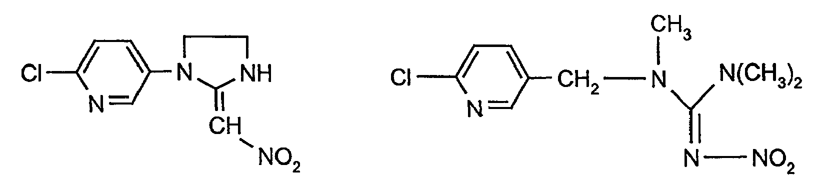

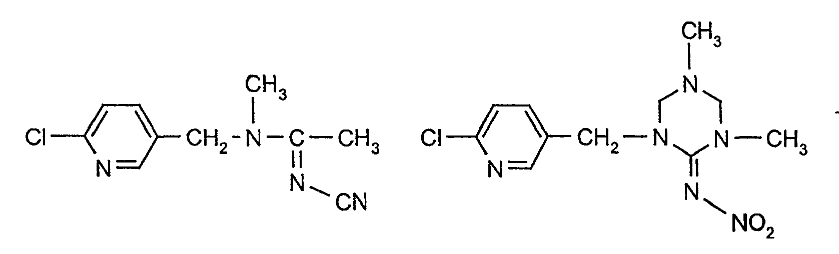

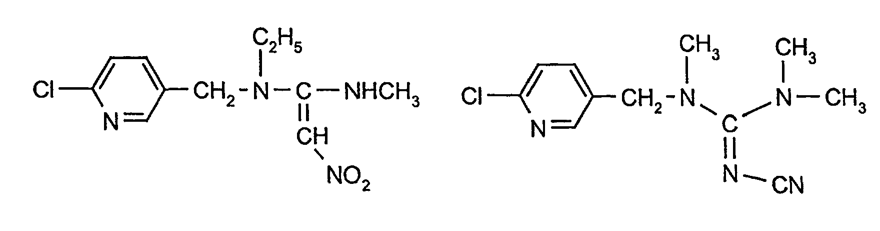

Insbesondere bevorzugt sind erfindungsgemäße Mischungen des oben genannten Synergisten mit Chlornicotinyl-Insektiziden der Formeln

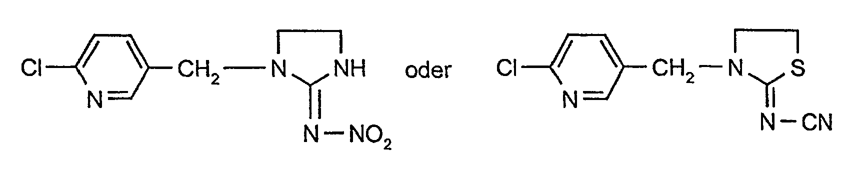

Die erfindungsgemäßen Wirkstoffmischungen von Chlornicotinyl-Insektiziden mit dem oben angegebenen Synergisten können in die üblichen Formulierungen überführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxy-methylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoffmischung, vorzugsweise zwischen 0,5 und 90 %.

Die Wirkstoffmischungen eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:
Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Phylloxera vastatrix, Pemphigus spp., Empoasca spp., Euscelis bilobatus, Nephotettix cincticeps, Lecanium comi, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis ehrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.
Aus der Ordnung der Siphonaptera z.B. Xenopsylla cheopis, Ceratophyllus spp..
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp.

Die erfmdungsgemäßen Wirkstoffmischungen können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten üblichen Weise.

In den folgenden Beispielen wird als insektizider Wirkstoff aus der Gruppe der Chlornicotinylinsektizide Imidacloprid der folgenden Formel verwendet:

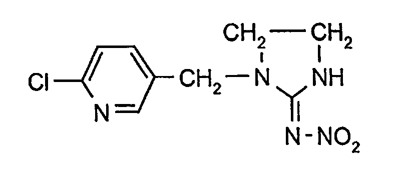

### Beispiel A

### Plutella-Test (BLT-Resistenz)

| | |
|---|---|
| Lösungsmittel: | 7 Gewichtsteile Dimethylformamid |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen der Kohlschabe (Plutella maculipennis, BLT-Resistenz) besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden.

Es wurden jeweils 0,02 % des Synergisten der jeweiligen Testkonzentration des Imidacloprids zugemischt. Bei diesem Test zeigten z.B. die folgenden Mischungen synergistische Wirkung:

**Tabelle A (pflanzenschädigende Insekten) Plutella-Test (resistent)**

| **Wirkstoffe** | **Wirkstoffkonzentration in %** | **Abtötungsgrad in % nach 7 Tagen** |
|---|---|---|
| Imidacloprid | 0,004 | 0 |
| Methamidophos | 0,004 | 0 |
| Imidacloprid + Methamidophos | 0,004 + 0,004 | 100 |

### Beispiel B

### Spodoptera-Test

| | |
|---|---|
| Lösungsmittel: | 7 Gewichtsteile Dimethylformamid |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen des Eulenfalters (Spodoptera frugiperda) besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden.

Es wurden jeweils 0,02 % des Synergisten der jeweiligen Testkonzentration des Imidacloprids zugemischt. Bei diesem Test zeigten z.B. die folgenden Mischungen synergistische Wirkung:

**Tabelle B (pflanzenschädigende Insekten) Spodoptera frugiperda-Test**

| **Wirkstoffe** | **Wirkstoffkonzentration in %** | **Abtötungsgrad in % nach 7 Tagen** |
|---|---|---|
| Imidacloprid | 0,004 | 50 |
| | 0,0008 | 0 |
| Methamidophos | 0,004 | 0 |
| Imidacloprid | 0,004 | 100 |
| + Methamidophos | + 0,004 | |

### Beispiel C

### Myzus-Test

| | |
|---|---|
| Lösungsmittel: | 3 Gewichtsteile Dimethylformamid |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea), die stark von der Pfirsichblattlaus (Myzus persicae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden.

**Tabelle C (pflanzenschädigende Insekten) Myzus-Test**

| **Wirkstoffe** | **Wirkstoffkonzentration in %** | **Abtötungsgrad in % nach 6 Tagen** |
|---|---|---|
| Imidacloprid | 0,00016 | 10 |
| Methamidophos | 0,004 | 0 |
| Imidacloprid | 0,00016 | 80 |
| + Methamidophos | + 0,004 | |

## Patentansprüche

1. Synergistische insektizide Mischungen von Chlornicotinyl-Insektiziden der Formel (I) 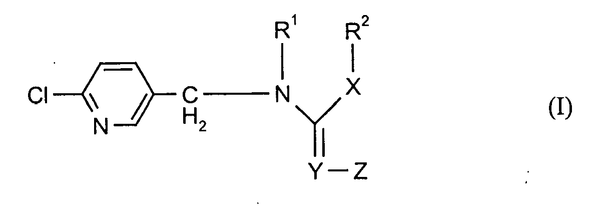 in welcher
R¹ für C₁-C₅-Alkyl steht,
R² für Wasserstoff oder C₁-C₅-Alkyl steht
oder
R¹ und R² zusammen für -CH₂-CH₂-; -CH₂-CH₂-CH₂- oder 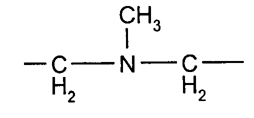 stehen,
X für eine NH-Gruppe, NCH₃-Gruppe oder für Schwefel steht,
Y für Stickstoff oder eine CH-Gruppe steht und
Z für Cyano oder Nitro steht,
mit O,S-Dimethylamidothiophosphat (Methamidophos).

2. Synergistische insektizide Mischungen von Chlornicotinyl-Insektiziden folgender Strukturformeln: 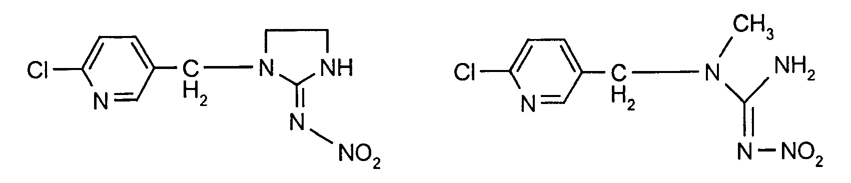 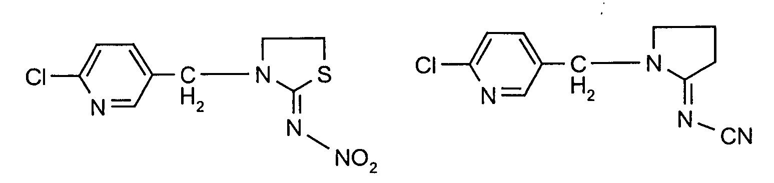 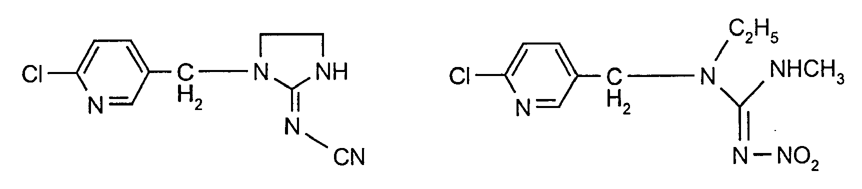 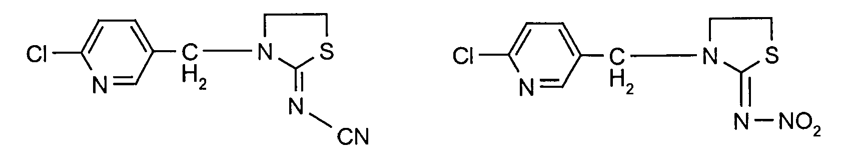 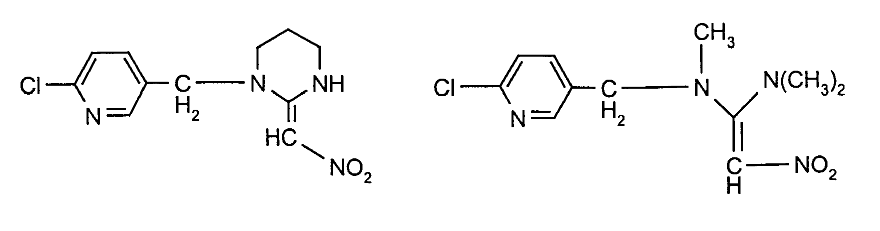 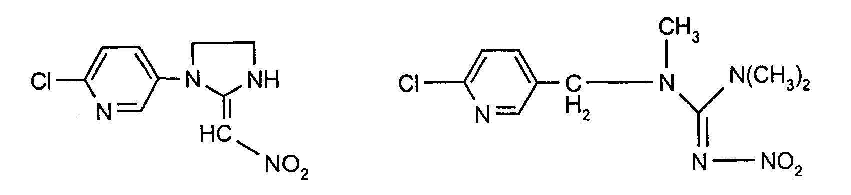 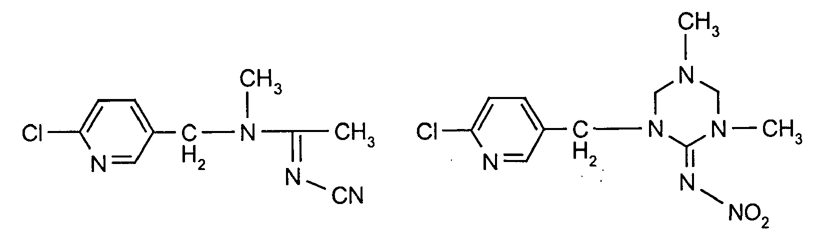 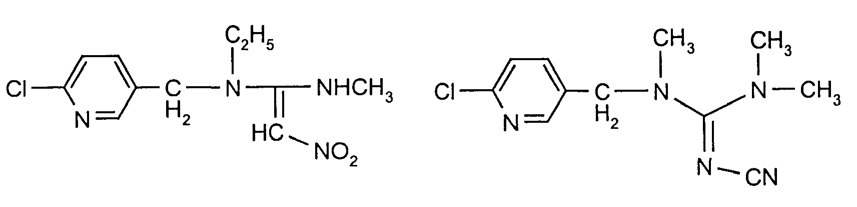 mit O, S-Dimethylamidothiophosphat.

3. Synergistische insektizide Mischungen von Chlornicotinyl-Insektiziden der Formeln 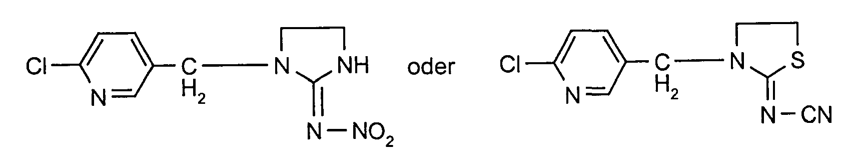 mit O, S-Dimethylamidothiophosphat.

4. Verfahren zur Herstellung insektizider Mischungen gemäß Anspruch 1, 2 oder 3, **dadurch gekennzeichnet, daß** man die Wirkstoffe mit Streckmitteln gegebenenfalls unter Verwendung von oberflächenaktiven Mitteln vermischt.

5. Insektizide Mischungen gemäß Anspruch 1, 2 oder 3, **dadurch gekennzeichnet, daß** sie zwischen 0,1 und 95 Gewichtsprozent Wirkstoffmischung enthalten.

6. Verwendung der insektiziden Mischungen gemäß Anspruch 1, 2 oder 3, zur Bekämpfung von Insekten, Spinnentieren und Nematoden.

## Claims

1. Synergistic insecticidal mixtures of chloronicotinyl insecticides of the formula (I) 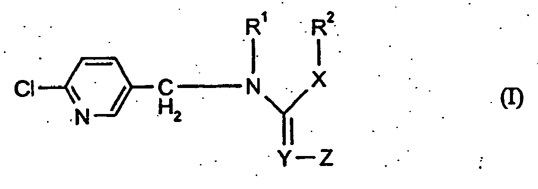 in which
R¹ represents C₁-C₅-alkyl,
R² represents hydrogen or C₁-C₅-alkyl
or
R¹ and R² together represent -CH₂-CH₂-; -CH₂-CH₂-CH₂- or 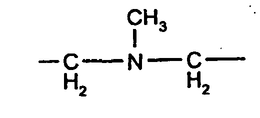 stehen,
X represents an NH group, NCH₃ group or represents sulphur,
Y represents nitrogen or a CH group and
Z represents cyano or nitro,
with O,S-dimethyl phosphoramidothioate [methamidophos]

2. Synergistic insecticidal mixtures of chloronicotinyl insecticides of the following structural formulae: 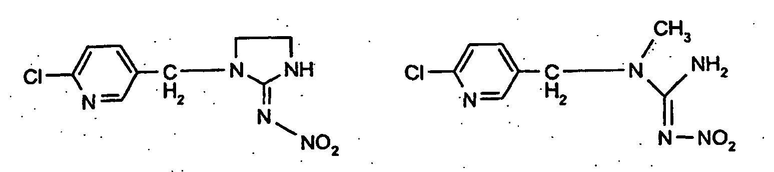 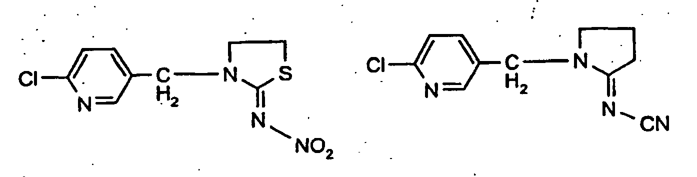 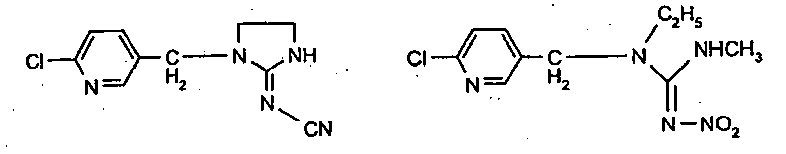 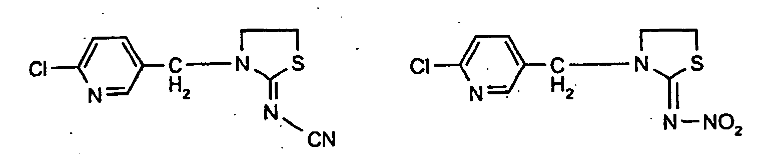 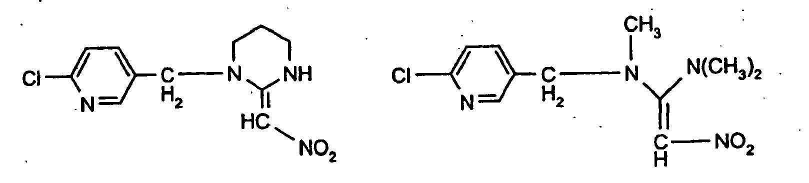 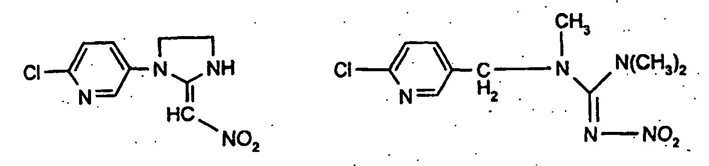 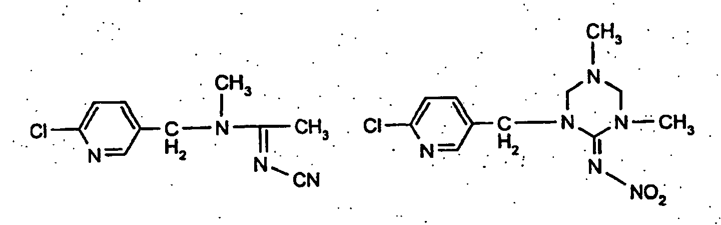 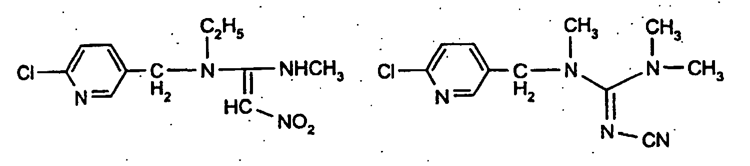 with O, S-dimethyl phosphoramidothioate.

3. Synergistic insecticidal mixtures of chloronicotinyl insecticides of the formulae 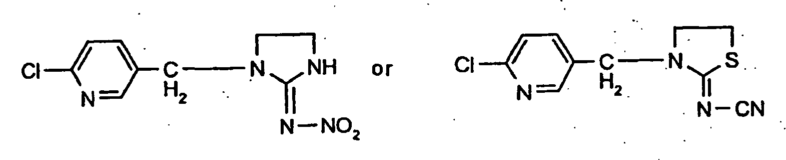 with O, S-dimethyl phosphoramidothioate.

4. Process for preparing insecticidal compositions according to Claim 1, 2 or 3, **characterized in that** the active compounds are mixed with extenders, optionally using surface-active agents.

5. Insecticidal mixtures according to Claim 1, 2 or 3, **characterized in that** they comprise between 0.1 and 95 per cent by weight of active compound mixture.

6. Use of the insecticidal mixtures according to Claim 1, 2 or 3 for combating insects, arachnids and nematodes.

## Revendications

1. Mélanges insecticides synergiques d'insecticides chloronicotiniliques de formule (I) 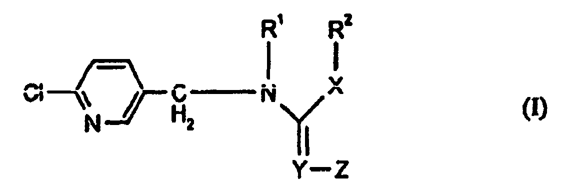 dans laquelle
R¹ représente un reste alkyle en C₁ à C₅,
R² représente l'hydrogène ou un reste alkyle en C₁ à C₅ ou bien
R¹ et R² forment ensemble un groupe -CH₂-CH₂- ; -CH₂-CH₂-CH₂- ou 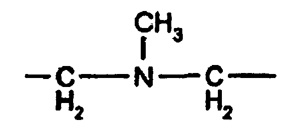
X représente un groupe NH, un groupe NCH₃ ou le soufre,
Y représente l'azote ou un groupe CH, et
Z représente un groupe cyano ou nitro,
et d'amidothiophosphates de O,S-diméthyle (méthamidophos).

2. Mélanges insecticides synergiques d'insecticides chloronicotiniliques de formules structurales suivantes : 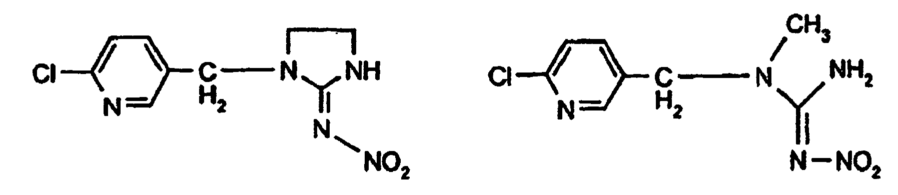 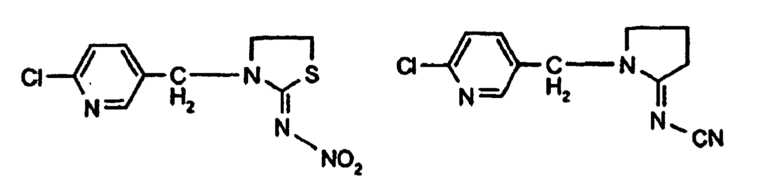 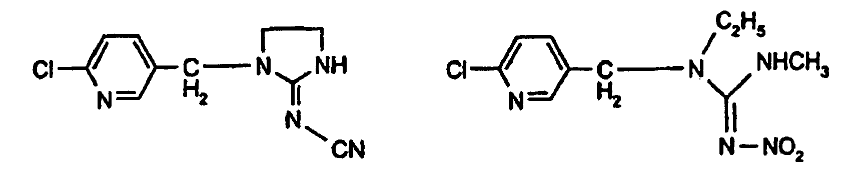 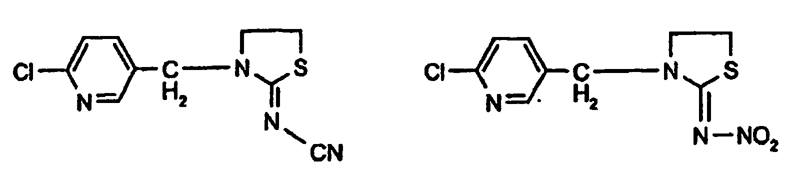 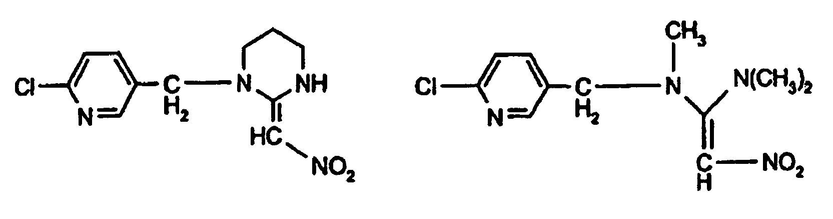 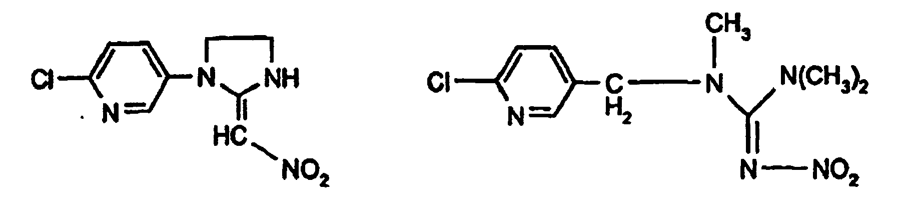 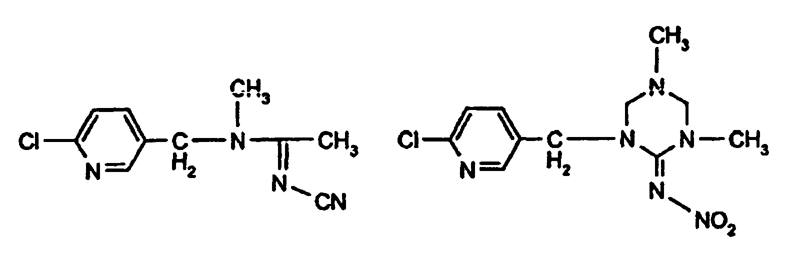 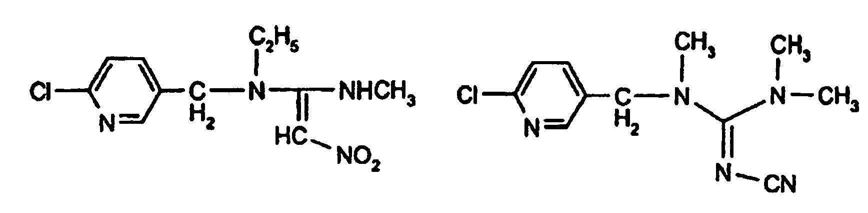 et d'amidothiophosphates de 0,S-diméthyle.

3. Mélanges insecticides synergiques d'insecticides chloronicotiniliques de formules 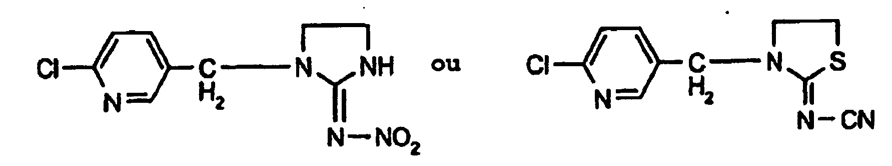 et d'amidothiophosphates de O,S-diméthyle.

4. Procédé de production de mélanges insecticides suivant la revendication 1, 2 ou 3, **caractérisé en ce qu'**on mélange les substances actives avec des diluants, en utilisant éventuellement des agents tensioactifs.

5. Mélanges insecticides suivant la revendication 1, 2 ou 3, **caractérisé en ce qu'**ils contiennent entre 0,1 et 95 % en poids de mélange de substances actives.

6. Utilisation de mélanges insecticides suivant la revendication 1, 2 ou 3 pour combattre des insectes, des acariens et des nématodes.
